# EUROPEAN PATENT SPECIFICATION

(11) **EP 3 110 766 B1**
(45) Date of publication and mention of the grant of the patent: **24.07.2019**
(21) Application number: 15708087.0
(22) Date of filing: 24.02.2015
(51) Int. Cl.: C03B 19/14, C03B 32/00, C03B 20/00

(54) **HEAT TREATING SILICA-TITANIA GLASS TO INDUCE A TZC GRADIENT**
WÄRMEBEHANDLUNG VON KIESELSÄURE-TITANDIOXID-GLAS ZUR BILDUNG EINES TZC-GRADIENTEN
TRAITEMENT THERMIQUE DE VERRE EN SILICE- DIOXYDE DE TITANE POUR FORMER UN GRADIENT DE TZC

(30) Priority: 26.02.2014 US 201461944646 P
(43) Date of publication of application: 04.01.2017
(73) Proprietor: Corning Incorporated, Corning, New York 14831 (US)
(72) Inventor: ANNAMALAI, Sezhian, Painted Post, NY 14870 (US); DURAN, Carlos Alberto, Ottawa, Ontario K2K 2L7 (CA)
(74) Representative: Elkington and Fife LLP
(86) International application number: PCT/US2015/017201
(87) International publication number: WO 2015/130632

(56) References cited:
- WO-A2-2011/078414
- US-A- 3 245 772
- US-A1- 2009 143 213
- US-A1- 2011 048 075
- US-A1- 2013 120 863

## Description

### FIELD

The present disclosure relates to heat treating a glass article. More particularly, the present disclosure relates to a method for heat treating a glass article to form a zero crossover temperature (T_{zc}) gradient, or changing a zero crossover temperature (T_{zc}) gradient, in a glass article.

### BACKGROUND

Extreme Ultra-Violet Lithography (EUVL) is a leading emerging technology for 13nm mode and beyond for the production of Micro Processing Unit and Dynamic Random Access Memory (MPU/DRAM) integrated chips. Presently, EUVL scanners which produce these Integrated Chips (ICs) are being produced on a small scale to demonstrate this new technology. The optics systems, which include reflective optical elements, are an important part of these scanners. As EUVL development continues, the specifications continue to become more stringent for the optics system parts.

In EUVL scanners, the optical elements are exposed to an intense extreme ultraviolet (EUV) radiation. Some portion of the EUV radiation used in EUVL systems is absorbed by the reflective coatings on the optical elements of the systems, which results in the heating of the top surface of the optical element by the impinging radiation. This causes the surface of the optical element to be hotter than the bulk of the optical element and results in a temperature gradient through the optical element. In addition, in order to image a pattern on semiconductor wafers, the surface of the optical element is not uniformly heated and a complex temperature gradient is formed through the thickness of the optical element, as well as along the optical element surface receiving the radiation. These temperature gradients lead to a distortion of the optical element, which in turn leads to smearing of the image being formed on the wafers. The low thermal conductivity of materials used in optical elements in the projection systems of EUVL scanners, their large size, and the requirement of operation in vacuum, inhibit efficient heat transfer and removal. It is expected that the difficulties of heat dissipation will be exacerbated by the increased optical element sizes and the increased power levels that are anticipated to meet the demands of future EUVL developments.

WO 2011/078414 A2 discloses a substrate for an EUV lithography optical member, comprising a silica glass containing TiO2, in which the substrate has two opposite surfaces, and the substrate has temperatures at which a coefficient of linear thermal expansion (CTE) is 0 ppb/°C (Cross-Over Temperature: COT), and in which the two opposite surfaces have difference in the COTs of 5°C or more.

US 2011/0048075 A1 discloses a method by which the T_{zc} of a silica-titania glass article, for example, an EUVL mirror substrate, can be tuned to within a specification range by means of a selected final anneal that shifts T_{zc} of the article or substrate to the desired T_{zc} value.

US 3245772 (A) discloses an apparatus for heat treating glass sheets comprising a top heating module with heating elements (32) and a bottom heating module with bottom heating elements (34).The modules are such that the temperature of the first (top) module can be raised higher than the temperature of the second (bottom) module. The temperatures which are reached are within the range necessary for forming a T_{zc} gradient in silica-titania glass.

### SUMMARY

According to embodiments of the present invention, a method for forming a zero crossover temperature (T_{zc}) gradient in a silica-titania glass article is provided. The method includes contacting a first surface of the glass article with a surface of a first heating module of a heating apparatus and contacting a second surface of the glass article with a surface of a second heating module of the heating apparatus. The method further includes raising the temperature of the first heating module to a first temperature to heat the first surface of the glass article, raising the temperature of the second heating module to a second temperature to heat the second surface of the glass article, wherein the first temperature is greater than the second temperature and maintaining the first heating module at the first temperature and the second heating module at the second temperature for a predetermined period of time to form a thermal gradient through the glass article. The method also includes cooling the glass article at a predetermined cooling rate to form a T_{zc} gradient through the thickness of the glass article.

Further disclosed is an apparatus for forming a zero crossover temperature (T_{zc}) gradient in a silica-titania glass article. The apparatus includes a first heating module comprising a plurality of heating elements within the first heating module, and a second heating module comprising a plurality of heating elements within the second heating module. The apparatus is configured to raise the temperature of the first heating module to a first temperature to heat
a first surface of a glass article and to raise the temperature of the second heating module to a second temperature to heat a second surface of the glass article, wherein the first temperature is greater than the second temperature.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

The disclosure will be understood more clearly from the following description and from the accompanying figures, given purely by way of non-limiting example, in which:
Figure 1A illustrates a silica-titania glass;
Figure 1B illustrates a silica-titania glass;
Figure 2 illustrates a silica-titania glass article;
Figure 3 illustrates a heating apparatus;
Figure 4 illustrates the placement of the silica-titania glass article of Figure 2 in the heating apparatus of Figure 3;
Figure 5 illustrates the placement of a silica-titania glass article in a heating apparatus;
Figure 6A is a top view of a heating apparatus;
Figure 6B is a top view of a heating apparatus; and
Figure 7 illustrates an apparatus for making a silica-titania glass article.

### DETAILED DESCRIPTION

Reference will now be made in detail to the present embodiment(s), an example(s) of which is/are illustrated in the accompanying drawings. Whenever possible, the same reference numerals will be used throughout the drawings to refer to the same or like parts.

The singular forms "a," "an" and "the" include plural referents unless the context clearly dictates otherwise. The endpoints of all ranges reciting the same characteristic are independently combinable and inclusive of the recited endpoint.

Embodiments of the present disclosure relate to methods of preparing silica-titania glass articles for use in EUVL. As used with reference to the silica-titania glasses, the methods of making the silica-titania glasses, and their use in EUVL applications as described herein, the term "article" refers to, and is inclusive of, glass of any dimension, glass substrates or parts made from such glass, whether finished or unfinished, and finished optical elements for use in an EUVL system. Also as used herein, the terms "near net shape" and "near net shaped" refer to an article which has been formed into a substantially final shape for a specific application, but on which final processing steps have not been performed. Such final processing steps may include, for example, final polishing and/or the deposition of coatings on the glass article.

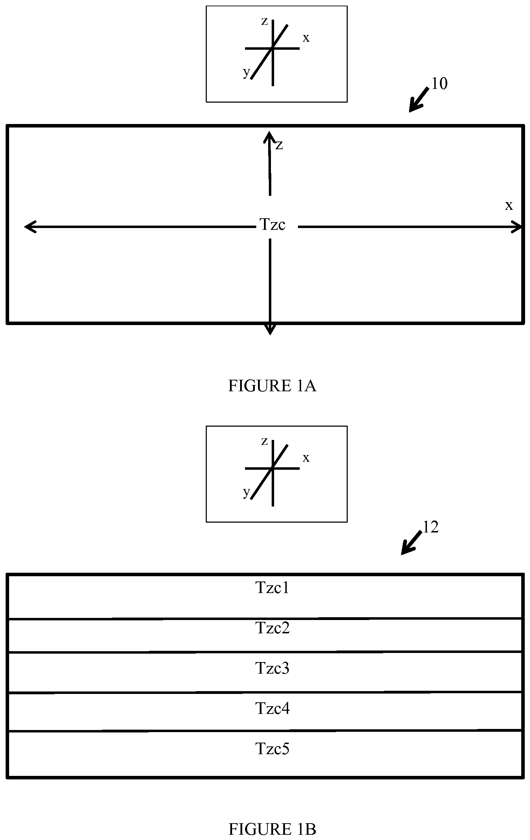

Also as used herein, the term "zero crossover temperature (T_{zc})" refers to the temperature at which the coefficient of thermal expansion of a volume of material of substantially uniform composition is equal to zero. When referring to a non-uniform volume, T_{zc} refers to the average T_{zc} over that volume. As shown in Figures 1A and 1B, the vertical axis is labeled as the z-axis and the horizontal axes are labeled as the x and y axes. References to vertical and horizontal axes made herein should be understood accordingly.

EUVL systems are reflective systems in which EUV light bounces from one reflective element to another. An exemplary EUVL system may contain a pair of condenser mirrors, an object such as a mask, and a plurality of projection mirrors. All of the foregoing optical elements typically have a multilayer coating, for example a Mo/Si coating, deposited on the article to reflect the incident light. At least some of the optical elements may be formed from a glass having a low coefficient of thermal expansion (CTE) such as Ultra Low Expansion (ULE®) glass commercially available from Corning Incorporated, Corning, NY.

Figure 1A illustrates silica-titania glass 10 having a uniform titania concentration, and thus uniform T_{zc}, through the glass 10. The glass 10 having uniform T_{zc} may be formed in accordance with conventional methods. Figure 1B illustrates silica-titania glass 12 having a plurality of layers T_{zc}1 to T_{zc}5, wherein each layer has a different titania concentration and a different T_{zc}. Though the exemplary glass 12 is depicted as having five layers of different T_{zc}, glass in accordance with embodiments of the present disclosure may have at least two layer having different T_{zc}. The glass 12 may be formed with a plurality of layers T_{zc}1 to T_{zc}5 using the method described herein, or may be formed using methods in which the silica and titania concentrations are controlled and varied to form layers of glass 12 having different titania concentrations, and thus different T_{zc}. For the purposes of the present disclosure, the series of layers as shown in Figure 1A will be referred to as a vertical T_{zc} gradient through the thickness of the glass 12. According to an embodiment of the present disclosure, the T_{zc} may decrease from layer T_{zc}1 to T_{zc}5 such that layer T_{zc}1 has the highest titania concentration and T_{zc}, and T_{zc}5 has the lowest titania concentration and T_{zc}. Alternatively, the T_{zc} may increase from layer T_{zc}1 to T_{zc}5 such that layer T_{zc}1 has the lowest titania concentration and T_{zc}, and T_{zc}5 has the highest titania concentration and T_{zc}

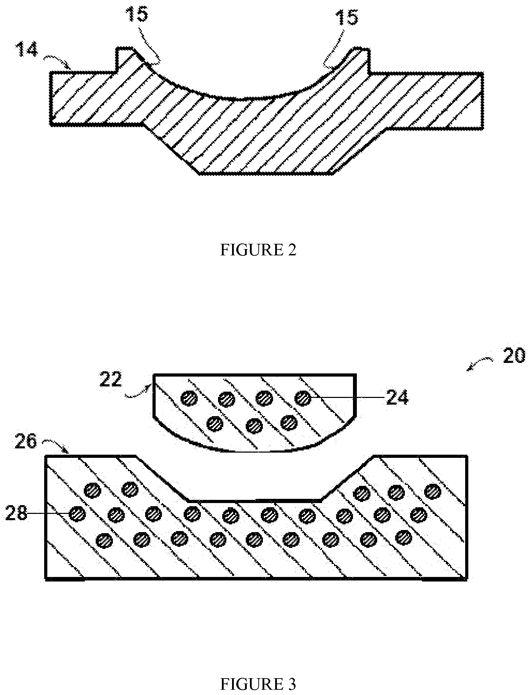

Figure 2 illustrates an exemplary near net shaped silica-titania glass article 14 machined to have a curved surface 15. The glass article 14 may be formed from either of the glass 10 shown in Figure 1A or the glass 12 shown in Figure 1B. Where formed from the glass 10 shown in Figure 1A, the glass article 14 will have uniform composition and T_{zc} through the glass article 14. Where formed from the glass 12 shown in Figure 1B, the glass article 14 will have the composition and T_{zc} gradients of glass 12. The surface 15 is shaped to provide a surface for impingement of EUV radiation in an EUVL system. As such, during final processing of the glass article 14, reflective materials may be deposited on the surface 15 to form a reflective coating.

Figure 3 illustrates a heating apparatus 20 that can be used to either impart a T_{zc} gradient to a glass article, or to change the T_{zc} gradient of the glass article. The heating apparatus 20 includes a top module 22 having heating elements 24 within the top module 22, and a bottom module 26 having heating elements 28 within the bottom module 26. When the heating apparatus 20 is used, top module 22 is heated to a first predetermined temperature T1 and bottom module 26 is heated to a second predetermined temperature T2, where T1 is greater than T2 (T1 > T2). Alternatively, bottom module 26 is heated to a first predetermined temperature T1 and top module 22 is heated to a second predetermined temperature T2, where T1 is greater than T2 (T1 > T2).

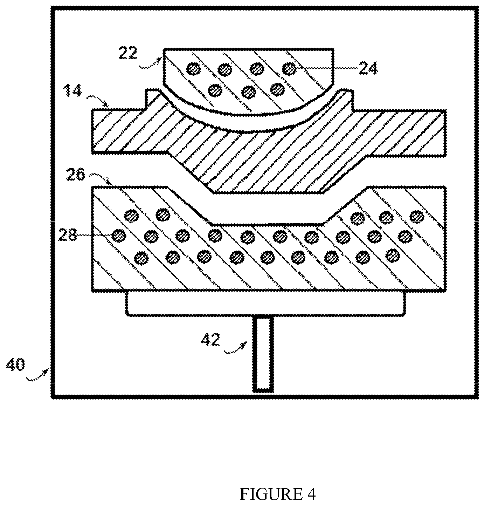

Figure 4 is an illustration in which a near net shaped glass article 14 is positioned between top module 22 and bottom module 26 of the heating apparatus 20. As shown, the heating apparatus 20 may be placed in heating oven 40 with bottom module 26 positioned on a stand 42. Top module 22 and bottom module 26 are shaped to correspond to the shape of the glass article 14. For example, the surface of the top module 22 has a substantially similarly curved shape as the surface 15 of glass article 14. These shapes facilitate bringing the top module 22 and the bottom module 26 into contact with the glass article 14 to either change the T_{zc} gradient of the glass article 14, or to impart a T_{zc} gradient to the glass article 14. When utilized, the furnace 40 is used to heat both the heating apparatus 20 and the near net shaped glass article 14 to a selected temperature that is less than the annealing temperature of the near net shaped glass article 14. According to embodiments of the present disclosure, the temperature in the furnace 40 is increased to between about 50°C and about 150°C below the annealing temperature of the glass article 14. The heating elements 24 and 28 are also employed to heat the glass article 14 at the surfaces where the modules 22 and 26 contact the glass article 14. Similar to the temperature of the furnace 40, the heating elements 24 and 28 may be heated to a temperature of between about 50°C and about 150°C below the annealing temperature of the glass article 14.

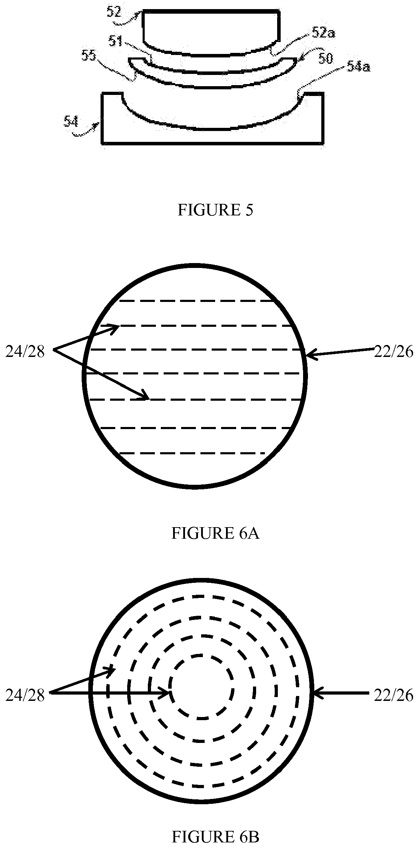

Figure 5 shows another exemplary near net shaped glass article 50 positioned between a top module 52 and a bottom module 54 of an apparatus similar to heating apparatus 20. As shown, the glass article 50 has a top surface 51 and a bottom surface 55. Top module 52 has a surface 52a and bottom module 54 has a surface 54a. The top module 52 and the bottom module 54 are shaped to correspond to the shape of the glass article 50. For example, the surface 52a of the top module 52 has a substantially similarly curved shape as the top surface 51 of the glass article 50, and the surface 54a of the bottom module 54 is curved to accommodate the curved bottom surface 55 of the glass article 50. These shapes facilitate bringing the top module 52 and the bottom module 54 into contact with the glass article 50 to either change the T_{zc} gradient of the glass article 50, or to impart a T_{zc} gradient to the glass article 50. Heating the glass article 50 corresponds to the heating of glass article 14 as discussed in relationship to Figure 4 above.

Figure 6A is a top view of the heating apparatus 20 showing exemplary embodiments of the configuration of heating elements 24 in the top module 22 and heating elements 28 in the bottom module 26. Top module 22 and bottom module 26 are represented only by the solid black line for ease of illustration. As shown in Figure 6A, heating elements 24 and 28 may be linear. In other words, individual heating elements 24 and 28 may extend from a position proximal to an edge or a wall of one of the modules toward another edge or wall of the same module. Individual heating elements 24 and 28 are separated from at least one other heating element 24 and 28 by a predetermined distance. While the linear heating elements 24 and 28 are shown in Figure 6A as being separated by equal distances, the liner heating elements 24 and 28 may be configured in modules 22 and 26 in any configuration or pattern. The configuration of linear heating elements 24 and 28 as shown in Figure 6A is used to impart a vertical T_{zc} gradient to a glass article, or to change the T_{zc} gradient of a glass article. Using the glass article of Figure 5 as an example, the vertical T_{zc} gradient may extend from the top surface 51 of the glass article 50 to the bottom surface 55 of the glass article 50.

Figure 6B is a top view of the heating apparatus 20 showing exemplary embodiments of the configuration of heating elements 24 in the top module 22 and heating elements 28 in the bottom module 26. Top module 22 and bottom module 26 are represented only by the solid black line for ease of illustration. As shown in Figure 6B, the heating elements 24 and 28 may be circular. In other words, the heating elements may be configured as contiguous rings around a center point of modules 22 and 26. Individual heating elements 24 and 28 are separated from at least one other heating element 24 and 28 by a predetermined distance. While the circular heating elements 24 and 28 are shown in Figure 6B as being separated by equal distances, the circular heating elements 24 and 28 may be configured in modules 22 and 26 in any configuration or pattern. The configuration of circular heating elements 24 and 28 as shown in Figure 6B is used to impart a horizontal T_{zc} gradient to a glass article, or to change the T_{zc} gradient of a glass article. A horizontal T_{zc} gradient extends from the center of the glass article to the edge of the glass article. A glass article having a horizontal T_{zc} gradient has circular segments having different T_{zc}, where the circular segments extend from the center of the glass article to the edge of the glass article. In order to impart a horizontal T_{zc} gradient to a glass article, or to change the T_{zc} gradient of a glass article, each of the heating elements 24 and 28 is independently controllable such that each of the heating elements 24 in top module 22 may be set at different temperatures and each of the heating elements 28 in bottom module 26 may be set at different temperatures.

According to embodiments of the present disclosure, the heating apparatuses disclosed herein form a temperature profile in near net shaped glass articles. By heat treating the glass articles with the heating apparatuses, a T_{zc} gradient may be formed in the glass articles. As described herein, the configuration of the heating elements 24 and 28 in modules 22 and 26 may be configured to form various temperature profiles which correlate to the formation of a predetermined T_{zc} gradient. Furthermore, the time for heat treating the glass articles and the power supplied to modules 22 and 26 may be controlled in order to impose a predetermined T_{zc} gradient on the glass articles.

According to embodiments of the present disclosure, a method is provided for forming a near net shaped glass article from glass having a known T_{zc} or T_{zc} gradient. Once formed, the near net shaped glass article may be placed in contact with the appropriate faces of the modules of the apparatuses illustrated in Figures 3 and 4. The temperature of the first heating module may be raised to a first temperature to heat a first surface of the glass article, and the temperature of the second heating module may be raised to a second temperature to heat a second surface of the glass article. As described above, the first temperature is greater than the second temperature.

The method may further include maintaining the first heating module at the first temperature and the second heating module at the second temperature for a predetermined period of time to form a thermal gradient through the glass article. The period of time may be between about 5.0 hours and about 300 hours. Additionally, the method may also include cooling the glass article at a predetermined cooling rate to form a T_{zc} gradient through the thickness of the glass article. For example, the cooling rate may be between about 1.0°C and about 50°C per hour.

The glass used to make the near net shaped glass article may be formed directly, or may be extracted from a glass preform. As mentioned above, the silica-titania glass may have uniform T_{zc} such as the glass 10 shown in Figure 1A, or may have a T_{zc} gradient such as the glass 12 shown in Figure 1B. However, because the glass 10 having uniform T_{zc} may be formed using conventional methods, making such glass 10 is less complex and less costly. Also, as a result of the less complex methods, preforms of glass 10 having dimensions large enough to form glass article 14 or glass article 50 may be made. Also, large preforms of glass 10 may be formed from which several different glass articles may be extracted. The methods described herein facilitate the formation from a single glass preform of glass articles having different T_{zc} gradients.

The glass may be formed using silica-titania soot, where the silica-titania soot is either: (a) collected and consolidated in one step (the direct method); or (b) collected in a first step and consolidated in a second step (the indirect or soot-to-glass method). The direct process has been described in U.S. Patent Nos. 8,541,325, RE41220 and 7,589,040, and the indirect process has been described in U.S. Patent No. 6,487,879. In the direct process, the time between deposition of the silica-titania soot and consolidation of the silica-titania soot may be less than about three seconds. In the indirect process the silica-titania soot is first deposited in a vessel, and consolidated into silica-titania glass after soot deposition is completed. Apparatuses described in U.S. Patent No. RE40,586 and U.S. Patent Application No. 2011-0207593 may also be used.

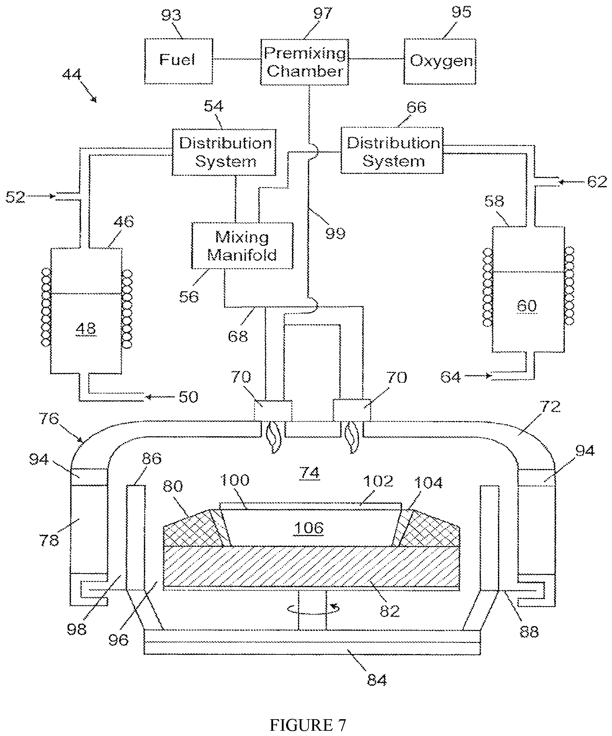

The apparatus illustrated in Figure 7 can be used to form silica-titania glass having a diameter in the range of about 0.20 meters to about 2.0 meters, or larger, and a thickness in the range of about 10 cm to about 30 cm. The size of the apparatus and glass being formed will affect the number of burners used. Using Figure 7 and the direct method as an example, a source 46 of a silica precursor 48 and a source 58 of a titania precursor 60 are provided. The silica precursor 48 and titania precursor 60 may be siloxanes, alkoxides, and tetrachlorides. For example, the silica precursor may be octamethylcyclotetrasiloxane (OMCTS), and the titania precursor may be titanium isopropoxide (Ti(OPri)₄). The sources 46, 58 may be vaporizers, evaporation tanks, or other equipment suitable for converting the precursors 48, 60 into vapor form. A carrier gas 50, such as nitrogen, is introduced at or near the base of source 46. The carrier gas 50 entrains the vapors of the silica precursor 48 and passes through a distribution system 54 to a mixing manifold 56. A by-pass stream of carrier gas is introduced at 52 to prevent saturation of the vaporous silica precursor stream. A stream of inert gas 62, e.g., nitrogen, can be brought into contact with the vaporous titania precursor to prevent saturation of the vapors. An inert carrier gas 64, e.g., nitrogen, entrains the titania precursor 60 vapors and carries the vapors through a distribution system 66 to the mixing manifold 56, where they are mixed with the silica precursor 48 vapors. Alternatively, the titania precursor 60 and the silica precursor 48 may be delivered to the mixing manifold 56 in liquid form. The mixture in the mixing manifold 56 passes through heated fume lines 68 to the burners 70 mounted on the furnace crown 72. In this illustration, two burners 70 are shown. However, more than two burners can be used to allow for better heat control and distribution of material across the deposition cavity 74. The furnace 76 may have rotation and oscillation capabilities and may include a stationary wall 78, which supports the crown 72. A containment vessel 80 is disposed within the stationary wall 78. The containment vessel 80 includes a base 82 which is supported for rotation and which also oscillates through its attachment to an oscillation table 84. The containment vessel 80 is surrounded by an air flow wall 86 which is mounted on the oscillation table 84. A motion accommodating seal 88 is formed between the stationary wall 78 and the containment vessel 80. The deposition cavity 74 is vented by a plurality of draft ports 94 formed at the top of the stationary wall 78. The draft ports 94 are connected to a suitable exhaust system (not shown) by ducting which creates a negative pressure in the deposition cavity 74 with respect to ambient pressure. Fuel 93 and oxygen 95 are premixed in the premixing chamber 97 and then transferred to the burners 70 through fume lines 99. The burners 70 ignite the fuel/oxygen mixture to produce a flame which heats the deposition cavity 74. The vaporous reactants injected into the burners 70 exit the burners 70 where they react and form titania-doped silica particles. The soot is directed downwardly and deposited on a planar surface 100, as shown at 102. The planar surface 100 may be provided by filling the liner 104 of the containment vessel 80 with cleaned cullet 106, although other means of providing a planar surface, such as a glass plate, may also be used. As the soot is deposited, the containment vessel 80, and hence the planar surface 100, is rotated and oscillated through the base 82 to improve homogeneity of the doped silica glass. During soot deposition, the furnace 76 is drafted with ambient air. The temperature of the deposition cavity 74 is monitored and held at desired processing temperatures by adjusting the vertical position of the containment vessel 80. In the direct process the temperature is maintained at a consolidation temperature so that the silica-titania particles are formed and consolidate into glass substantially simultaneously. Such time may be less than about 3.0 seconds and typically is less than about 2.0 seconds. After the glass is consolidated, it can be annealed in the same furnace according to an annealing cycle described herein, or the glass can be removed from the furnace and annealed at a later time.

Based on the heat load generated on a glass article in an intended application, the temperature gradient that will be created in the bulk of the glass article can be determined by using the thermal conductivity of the silica-titania glass, the placement and performance of heat removal devices and knowledge of the surrounding environment. For example, Corning Code 7972 ULE® glass has a published thermal conductivity of 1.31 W/(m•°C) at room temperature, and moderately increases with increasing temperature. Using the calculated temperature gradient, a T_{zc} gradient that will minimize distortions of the glass caused by the temperature gradient can be obtained.

Table I illustrates a T_{zc} gradient through the thickness of glass where εᵢ represents titania concentration variation that is either a natural result of the process of forming the glass, or the result of intentional modifications to the process for forming the glass. Table II illustrates an example of a temperature profile of glass when used as an optical element in an EUVL system. As shown in the table, the glass has a simple linear profile in which the surface receiving EUV radiation has a surface temperature of about 37°C and the surface farthest from the radiation receiving surface has a temperature of about 35°C. Table III illustrates a T_{zc} gradient through the thickness of the glass that will reduce distortion of the glass due to the temperature profile that is formed as a result of the impinging radiation, compared to a glass article of uniform T_{zc} as illustrated in Table I. The profiles in Tables I, II, and III are for illustration purposes only, and it is to be understood that the detailed shape of a T_{zc} profile that will minimize distortions for each particular application need be determined based on the specific operating conditions for the glass article.

| Table I | | Table II | | Table III |
|---|---|---|---|---|
| Glass T_{zc} Gradient | | Temperature Profile of Glass In EUVL Application | | Glass T_{zc} Gradient To Minimize Glass Distortion |
| Tzc = 40 ± ε₁°C | | T = 45°C | | T_{zc} = 40°C |
| Tzc = 40 ± ε₂°C | | T = 43°C | | T_{zc} = 39°C |
| Tzc = 40 ± ε₃°C | | T = 41°C | | T_{zc} = 38°C |
| Tzc = 40 ± ε₄°C | | T = 39°C | | T_{zc} = 37°C |
| Tzc = 40 ± ε₅°C | | T = 37°C | | T_{zc} = 36°C |
| Tzc = 40 ± ε₆°C | | T = 35°C | | T_{zc} = 35°C |

By determining the temperature profile of the intended application of the glass article, such as the temperature profile in Table II, an appropriate T_{zc} gradient for the glass article, such as the one shown in Table III, can be determined and proper heat treating in accordance with the methods described herein can be determined. As mentioned above, embodiments of the present disclosure allow for the formation of a T_{zc} gradient in glass articles formed from glass having uniform T_{zc}, as well as the changing to a second T_{zc} gradient to minimize glass distortion in an intended application in glass articles formed from glass having a first T_{zc} gradient.

Embodiments of the present disclosure provide methods for forming a T_{zc} gradient in a glass article. Embodiments described herein provide for the incorporation of a T_{zc} gradient after the formation of a near net shaped glass article. Furthermore, the glass from which the near net shaped glass article is formed may have uniform composition and uniform T_{zc}. In other words, the glass from which the near net shaped glass article is formed need not include compositional variations and/or a T_{zc} gradient. As such, large dimensioned preforms of glass may be formed from which smaller glass articles may be extracted and a plurality of glass articles having various T_{zc} gradients may be formed.

## Claims

1. A method for forming a zero crossover temperature (T_{zc}) gradient in a silica-titania glass article, the method comprising:
contacting a first surface of the glass article with a surface of a first heating module of a heating apparatus;
contacting a second surface of the glass article with a surface of a second heating module of the heating apparatus;
raising the temperature of the first heating module to a first temperature to heat the first surface of the glass article;
raising the temperature of the second heating module to a second temperature to heat the second surface of the glass article, wherein the first temperature is greater than the second temperature;
maintaining the first heating module at the first temperature and the second heating module at the second temperature for a predetermined period of time to form a thermal gradient through the glass article; and
cooling the glass article at a predetermined cooling rate to form a T_{zc} gradient through the thickness of the glass article.

2. The method of claim 1, wherein the glass article has a first T_{zc} gradient prior to contacting the first and second surfaces of the glass article, and wherein cooling the glass article at a predetermined cooling rate forms a second T_{zc} gradient through the thickness of the glass article.

3. The method of any of the preceding claims, wherein the first and second temperatures are less than the annealing temperature of the glass article.

4. The method of any of the preceding claims, wherein maintaining the first heating module at the first temperature and the second heating module at the second temperature for a predetermined period of time comprises maintaining for a period of between 5.0 hours and 300 hours.

5. The method of any of the preceding claims, wherein cooling the glass article at a predetermined cooling rate comprises cooling at a cooling rate of between 1.0°C and 50°C per hour.

6. The method of any of the preceding claims, wherein the glass article comprises between 5.0 wt.% and 15 wt.% titania.

7. The method of any of the preceding claims, wherein the glass article further comprises at least one dopant selected from the group consisting of fluorine, OH, oxides of aluminum, boron, sodium, potassium, magnesium, calcium, lithium and niobium and combinations thereof.

8. The method of any of the preceding claims, wherein the glass article having the T_{zc} gradient comprises a plurality of layers having different titania concentrations.

9. The method of claim 8, wherein the plurality of layers comprise a sequence of layers from the layer having the highest titania concentration to the layer having the lowest titania concentration.

10. The method of claim 9, wherein the first surface of the glass article comprises the layer having the highest titania concentration and the second surface of the glass article comprises the layer having the lowest titania concentration.

11. The method of any of the preceding claims, further comprising, prior to raising the temperature of the first and second heating modules, placing the glass article and the heating apparatus in a furnace and raising the temperature of the furnace.

12. The method of claim 11, comprising raising the temperature of the furnace to a temperature of less than the annealing temperature of the glass article.

## Patentansprüche

1. Verfahren zum Bilden eines Nulldurchgangstemperatur-(T_{zc})-Gradienten in einem Siliziumdioxid-Titandioxid-Glasartikel, wobei das Verfahren umfasst:
Kontaktieren einer ersten Oberfläche des Glasartikels mit einer Oberfläche eines ersten Heizmoduls einer Heizvorrichtung;
Kontaktieren einer zweiten Oberfläche des Glasartikels mit einer Oberfläche eines zweiten Heizmoduls der Heizvorrichtung;
Erhöhen der Temperatur des ersten Heizmodus auf eine erste Temperatur, um die erste Oberfläche des Glasartikels zu heizen;
Erhöhen der Temperatur des zweiten Heizmoduls auf eine zweite Temperatur, um die zweite Oberfläche des Glasartikels zu heizen, wobei die erste Temperatur größer als die zweite Temperatur ist;
Halten des ersten Heizmoduls auf der ersten Temperatur und des zweiten Heizmoduls auf der zweiten Temperatur für einen vorbestimmten Zeitraum, um einen thermischen Gradienten durch den Glasartikel zu bilden;
und Abkühlen des Glasartikels bei einer vorbestimmten Abkühlungsrate, um einen T_{zc}-Gradienten durch die Dicke des Glasartikels zu formen.

2. Verfahren nach Anspruch 1, wobei der Glasartikel vor dem Kontaktieren der ersten und zweiten Oberfläche des Glasartikels einen ersten T_{zc}-Gradienten aufweist und wobei das Kühlen des Glasartikels bei einer vorbestimmten Abkühlungsrate einen zweiten T_{zc}-Gradienten durch die Dicke des Glasartikels bildet.

3. Verfahren nach einem der vorstehenden Ansprüche, wobei die erste und zweite Temperatur unter dem oberen Kühlpunkt des Glasartikels liegen.

4. Verfahren nach einem der vorstehenden Ansprüche, wobei das Halten des ersten Heizmoduls auf der ersten Temperatur und des zweiten Heizmoduls auf der zweiten Temperatur für einen vorbestimmten Zeitraum das Halten für einen Zeitraum zwischen 5,0 Stunden und 300 Stunden umfasst.

5. Verfahren nach einem der vorstehenden Ansprüche, wobei das Kühlen des Glasartikels bei einer vorgegebenen Abkühlungsrate das Kühlen bei einer Abkühlungsrate von zwischen 1,0°C und 50°C pro Stunde umfasst.

6. Verfahren nach einem der vorstehenden Ansprüche, wobei der Glasartikel zwischen 5,0 Gew.-% und 15 Gew.-% Titandioxid umfasst.

7. Verfahren nach einem der vorstehenden Ansprüche, wobei der Glasartikel ferner mindestens ein Dotierungsmittel, ausgewählt aus der Gruppe, bestehend aus Fluor, OH, Oxiden von Aluminium, Bor, Natrium, Kalium, Magnesium, Kalzium, Lithium und Niob oder Kombinationen daraus umfasst.

8. Verfahren nach einem der vorstehenden Ansprüche, wobei der Glasartikel mit dem T_{zc}-Gradienten eine Vielzahl von Schichten mit unterschiedlichen Titandioxidkonzentrationen umfasst.

9. Verfahren nach Anspruch 8, wobei die Vielzahl von Schichten eine Abfolge von Schichten von der Schicht mit der höchsten Titandioxidkonzentration zu der Schicht mit der niedrigsten Titandioxidkonzentration umfasst.

10. Verfahren nach Anspruch 9, wobei die erste Oberfläche des Glasartikels die Schicht mit der höchsten Titandioxidkonzentration und die zweite Oberfläche des Glasartikels die Schicht mit der niedrigsten Titandioxidkonzentration umfasst.

11. Verfahren nach einem der vorstehenden Ansprüche, ferner umfassend, vor dem Erhöhen der Temperatur des ersten und zweiten Heizmoduls, Platzieren des Glasartikels und der Heizvorrichtung in einen Ofen und Erhöhen der Temperatur des Ofens.

12. Verfahren nach Anspruch 11, umfassend Erhöhen der Temperatur des Ofens auf eine Temperatur, die niedriger als der obere Kühlpunkt des Glasartikels ist.

## Revendications

1. Procédé de formation d'un gradient de température d'équilibre nulle (T_{zc}) dans un article en verre de silice-titane, le procédé comprenant :
la mise en contact d'une première surface de l'article en verre avec une surface d'un premier module de chauffe d'un appareil de chauffe ;
la mise en contact d'une deuxième surface de l'article en verre avec une surface d'un deuxième module de chauffe de l'appareil de chauffe ;
l'élévation de la température du premier module de chauffe à une première température pour chauffer la première surface de l'article en verre ;
l'élévation de la température du deuxième module de chauffe à une deuxième température pour chauffer la deuxième surface de l'article en verre, dans lequel la première température est supérieure à la deuxième température ;
le maintien du premier module de chauffe à la première température et du deuxième module de chauffe à la deuxième température pendant un laps de temps prédéterminé pour former un gradient thermique à travers l'article en verre ;
et le refroidissement de l'article en verre à un taux de refroidissement prédéterminé pour former un gradient T_{zc} à travers l'épaisseur de l'article en verre.

2. Procédé selon la revendication 1, dans lequel l'article en verre a un premier gradient T_{zc} avant la mise en contact des première et deuxième surfaces de l'article en verre, et dans lequel le refroidissement de l'article en verre à un taux de refroidissement prédéterminé forme un deuxième gradient T_{zc} à travers l'épaisseur de l'article en verre.

3. Procédé selon l'une quelconque des revendications précédentes, dans lequel les première et deuxième températures sont inférieures à la température de recuit de l'article en verre.

4. Procédé selon l'une quelconque des revendications précédentes, dans lequel le maintien du premier module de chauffe à la première température et du deuxième module de chauffe à la deuxième température pendant un laps de temps prédéterminé comprend un maintien pendant une période comprise entre 5,0 heures et 300 heures.

5. Procédé selon l'une quelconque des revendications précédentes, dans lequel le refroidissement de l'article en verre à un taux de refroidissement prédéterminé comprend un refroidissement à un taux de refroidissement compris entre 1,0° C et 50° C par heure.

6. Procédé selon l'une quelconque des revendications précédentes, dans lequel l'article en verre comprend entre 5,0 % massique et 15 % massique de titane.

7. Procédé selon l'une quelconque des revendications précédentes, dans lequel l'article en verre comprend en outre au moins un dopant sélectionné dans le groupe constitué de fluorine, OH, oxydes d'aluminium, bore, sodium, potassium, magnésium, calcium, lithium et niobium et des combinaisons de ceux-ci.

8. Procédé selon l'une quelconque des revendications précédentes, dans lequel l'article en verre ayant le gradient T_{zc} comprend une pluralité de couches ayant différentes concentrations de titane.

9. Procédé selon la revendication 8, dans lequel la pluralité de couches comprennent une séquence de couches depuis la couche ayant la plus haute concentration de titane jusqu'à la couche ayant la plus basse concentration de titane.

10. Procédé selon la revendication 9, dans lequel la première surface de l'article en verre comprend la couche ayant la plus haute concentration de titane et la deuxième surface de l'article en verre comprend la couche ayant la plus basse concentration de titane.

11. Procédé selon l'une quelconque des revendications précédentes, comprenant en outre, avant l'élévation de la température des premier et deuxième modules de chauffe, le placement de l'article en verre et de l'appareil de chauffe dans un fourneau et l'élévation de la température du fourneau.

12. Procédé selon la revendication 11, comprenant l'élévation de la température du fourneau à une température inférieure à la température de recuit de l'article en verre.
